# EUROPEAN PATENT APPLICATION

(11) **EP 4 471 186 A1**
(43) Date of publication of application: **04.12.2024**
(21) Application number: 23746532.3
(22) Date of filing: 30.01.2023
(51) Int. Cl.: C25B 1/135, C25B 11/033

(54) **METHOD FOR ELECTROCHEMICAL CO2 DECOMPOSITION**

(30) Priority: 28.01.2022 ES 202230070
(71) Applicant: Consejo Superior de Investigaciones Cientificas, 28006 Madrid (ES); Universitat Politècnica de València, 46022 Valencia (ES)
(72) Inventor: SERRA ALFARO, José Manuel, 46022 Valencia (ES); SIURANA PAULA, Maria, 46022 Valencia (ES)
(74) Representative: Pons
(86) International application number: PCT/ES2023/070047
(87) International publication number: WO 2023/144436

(57) **Abstract**

The present invention relates to a method for decomposing CO₂ into O₂ and solid C in an electrochemical reactor, which comprises at least the following steps: i) introducing CO₂ into a cathode chamber (1) containing at least one cathode fluid (2) with electrical conductivity > 5 mS/cm; ii) decomposing the CO₂ in the cathode chamber by applying an electric field to the solid electrolyte (3), forming at least oxide ions (O²⁻), which are selectively transported through the solid electrolyte from the cathode chamber to an anode chamber (4), and solid carbon; iii) extracting, from the anode chamber, the O₂ produced on the anode (5) from the ions transported in step ii); and iv) extracting, from the cathode chamber, the solid C formed in step ii).

## Description

### Field of the invention

The present invention describes/relates to a method for the capture and sequestration/perpetual storage of CO₂ in the form of carbonaceous material based on electrochemical methods and thermo-mechanical management of fluid streams.

### Background of the invention

Currently, there are different technologies to capture (or separate) CO₂ molecules from gas mixtures. These technologies make it possible to capture CO₂ that is produced in combustion processes, separating it from the rest of the gases in the exhaust streams (post-combustion capture), or directly capture CO₂ from the atmosphere (direct air capture).

The main technologies for separating CO₂ from a gas mixture include:
*Chemical absorption.* It is based on the reaction between CO₂ and a chemical solvent (where amine-based solvents, such as ethanolamine, are the most common) (Wang et al., Chem. Eng. Res. Des., 89 (2011)). In general, the process takes place in two stages that occur in two separate columns: in the first stage, the capture stage, the solvent is brought into contact with the gas stream (containing the CO₂ to be captured) and reacts with the CO₂ molecules (trapping them in the solvent); in the second stage, the regeneration stage, the temperature of the solvent (containing the absorbed CO₂) is increased to cause the release of pure CO₂ and regenerate the solvent for use in a new absorption-regeneration cycle.
*Physical absorption.* It differs from the previous technology in that, in this case, the liquid solvent does not chemically react with CO₂; the CO₂ molecules simply dissolve in the liquid medium. The most common solvents in this technology are proprietary formulations of different companies (such as Selexol^{™} from Honeywell UOP, or Rectisol^{™} used by Linde and Air Liquide) (Yu et al., Aerosol Air Qual Res, 12 (2012)).
*Surface adsorption.* It is based on the selective binding (adsorption) of CO₂ molecules on the surface of a solid (such as activated carbon, alumina, metal oxides, molecular sieves or zeolites) (Ben-Mansour et al., Appl. Energy, 161 (2016)). This process also takes place in two stages. In the capture stage, the gas is exposed to the solid and the CO₂ molecules are adsorbed on its surface, while the rest of the gas molecules circulate normally. Once the solid is saturated, it undergoes a regeneration stage in which the molecules are released (desorbed) from the surface. This desorption can be based on an increase in temperature, in the case of temperature swing adsorption (TSA), or a decrease in pressure. In the second case, there are two possibilities: (i) adsorption takes place at high pressure and desorption at atmospheric pressure, in which case it is called pressure swing adsorption (PSA), and (ii) adsorption occurs at atmospheric pressure and desorption under vacuum, in the case of the so-called vacuum swing adsorption (VSA).
*Cryogenic separation.* It is based on the cooling of CO₂ to desublimation temperatures (around -135 to -100°C), which enables the separation of the solid CO₂ formed from the rest of the (lighter) gases. Next, the solid CO₂ is compressed to 100 - 200 atm and remains in a liquid state at cryogenic temperatures (around -80°C) (Song et al., Renew. Sust. Energ. Rev., 101 (2019)). It allows for the production of high-purity streams but entails high energy consumption.
*Membrane separation.* It is based on the use of membranes (polymeric or inorganic) that allow certain substances to pass through while retaining others (Norahim et al., Chem. Eng. Technol., 41 (2018)). In some cases, selected membranes allow CO₂ molecules (with high selectivity) to pass while blocking the passage of other substances present in the gas stream. In other examples, the membrane retains CO₂ molecules and allows other smaller molecules, such as H₂, to pass. The selection of the most suitable membrane depends on the starting gas mixture.
*Calcium looping.* This technology involves the capture of CO₂ at high temperatures using two reactors. In the first reactor, lime (CaO) is used as a sorbent to capture CO₂ from a gas stream, forming calcium carbonate (CaCO₃). CaCO₃ is subsequently transported to the second reactor, where it is regenerated, resulting in lime, which is returned to the first reactor, and a pure CO₂ stream (Blamey et al., Prog. Energy Combust. Sci., 36 (2010)).

These carbon capture technologies are typically combined with sequestration strategies (storage or utilisation) resulting in greenhouse gas emissions mitigation strategies based on CO₂ capture, usage and storage (CCUS).

Geological storage of CO₂ involves the injection of captured CO₂ into an underground geological reservoir of porous rock (that can hold CO₂) overlaid by an impermeable layer of rocks, which seals the reservoir and prevents CO₂ from rising and eventually being released into the atmosphere (IEA, CCUS in Clean Energy Transitions (2020)). Two types of reservoirs suitable for CO₂ storage have been identified: deep saline formations (layers of porous and permeable rocks saturated with salt water, which are widespread in both onshore and offshore sedimentary basins), and depleted oil and gas reservoirs (porous rock formations that have trapped oil or gas for millions of years before being extracted). In general, the captured CO₂ is liquefied (by compression) to increase its density before being injected into the geological reservoir. The reservoir must be at depths greater than 800 metres to retain the CO₂ in a liquid state.

Given the conditions that must be met, suitable reservoirs for the geological storage of liquefied CO₂ are found in very specific locations on Earth. These restrictions have a series of associated problems. On the one hand, the problems derived from transportation to the site (subsoil injection point): it involves transportation that is long-distance, complex (due to the chemical risks involved and because it is a cryogenic fluid), and unsustainable (given that CO₂ must be maintained under cryogenic conditions). On the other hand, different countries have different regulations (in some cases very restrictive) regarding the transportation and the injection of CO₂, mainly due to the risk of violent release. Lastly, it is difficult to completely rule out the possibility of leakage into the atmosphere over time.

The strategies for CO₂ usage are based on its utilisation as raw material to produce products (or services) of interest. The available options include applications for the direct use of CO₂, without any conversion or chemical alteration, and technologies that involve the transformation (conversion) of CO₂ into other products with a high added value. Currently, CO₂ is used as a raw material in the manufacture of urea to produce fertilisers (125 Mt of CO₂ per year worldwide), in the oil industry for enhanced oil recovery (EOR) (70 - 80 Mt of CO₂ per year), and in other commercial uses, such as in the food and beverage industry, in water treatment or in cooling (IEA, Putting CO₂ to Use (2019)). Apart from these "traditional" uses of CO₂, pathways have appeared more recently that are based on its utilisation to produce hydrocarbons (used as fuels or chemicals) or building materials.

Carbon sequestration processes through CO₂ hydrogenation to synthesise hydrocarbons require the production of green H₂ (without an associated carbon footprint), which has a high energy cost. The production of H₂ and hydrocarbons have average energy efficiencies since they are multi-step processes that also generate waste heat that must be dissipated to the environment. In general, the generated hydrocarbons do not involve perpetual storage, due to their use as fuel or because they are products that have a retention life of, at most, a few years (solvents, detergents, polymers, etc.) or due to their possible leakage into the atmosphere.

Another alternative is CO₂ mineralisation, in the form of carbonates, for use as a building material or for permanent storage in solid form. This process is based on the use of solids with a certain alkalinity, such as for example building waste (cements) or metallurgy waste (slag), which react with CO₂ to form carbonates. This alternative has a significant advantage: it allows perpetual storage, in a simple way, in mines or major civil works. However, it has some drawbacks. On the one hand, the materials used usually have a high associated carbon footprint (since the alkalinity of these materials is generally produced by prior decomposition of stable fossil carbonates). On the other hand, it requires the use of heavy solids that, in general, have to be ground and/or transported, and it has a limited specific capacity (gCO₂/kg material) of CO₂ storage.

Controlling the concentration of CO₂ in the Earth's atmosphere requires technologies that allow it to be separated and perpetually fixed in an efficient, effective and sustainable manner. Technologies are required that allow the permanent or perpetual sequestration of variable amounts of CO₂, depending on the source, including both capture from direct sources (such as industrial combustion processes) and direct capture from the atmosphere. These technologies must be modular and scalable to meet the needs of each application, must be energy efficient and must be safe, for both people and the natural environment. The present invention proposes converting CO₂ in a single step into an easily transportable and storable solid product that does not involve risks of release back into the atmosphere. The proposed technology is based on an electrochemical reactor that optimises the energy efficiency of the process, and it is easily scalable due to its modularity.

It is known that there are systems capable of transforming methane (CH₄) or other hydrocarbons (molecules containing carbon and hydrogen) into solid carbon and gaseous hydrogen by thermal/thermo-catalytic decomposition in the absence of oxygen (Ahmed et al., Appl. Catal. A: Gen., 359 (2009)), according to the reaction:

CₙH₂ₙ₊₂ → n C + (n+1) H₂

Some of these systems use a molten metal bath as a means to maintain the high temperatures required for the reaction (Abanades Velasco et al., European Patent 18382064, 6 Feb. 2018). In some cases, these molten metals are alloys containing metals that act as catalysts of the reaction, even when the activation of high-energy molecules, such as hydrocarbons, is thermodynamically favourable.

However, these systems are not effective for decomposing CO₂. Unlike hydrocarbons, CO₂ is a highly thermodynamically stable molecule (with a standard enthalpy of formation of -393.5 kJ/kmol, compared to -74.9 for methane or -84.7 for ethane) that is practically inert, which makes its activation to yield other substances (its elemental components in the case of the present invention) complex and energy-intensive (Álvarez et al., ChemPhysChem, 18 (2017)). At the same time, it is necessary to enable a system for the management and removal of the oxygen present in the CO₂ molecule. The systems currently used for decomposing hydrocarbons into C (s) and H₂ (g) operate under non-oxidative conditions and are not capable of activating the CO₂ molecule to allow it to decompose to form C (s). In the present invention, a system capable of activating this low-reactivity molecule and decomposing it into its elemental components, C (s) and O₂ (g), is proposed, achieving high energy efficiency.

The system proposed in the present invention is based on the use of an electrochemical reactor. This electrochemical reactor contains a fluid with high electrical conductivity in the cathode chamber that acts as (1) a current collector and/or as an electrode (cathode) and (2) as a homogeneous catalyst for the nucleation and growth of carbonaceous solid particles from gaseous species such as CO (g). Systems have been described that use molten metals as anodes in different electrochemical reactors, such as in the chlor-alkali industry, aluminium metallurgy or solid oxide fuel cells, (Jayakumar et al., Ind. Eng. Chem. Res., 49 (2010)). In the latter system, a molten metal is used as an anode that promotes the oxidation of a solid fuel (Javadekar et al., J. Power Sources, 214 (2012)).

On the contrary, in the present invention, the fluid with high electrical conductivity must promote the transformation of CO₂ into solid carbon through molecular mechanisms that enable the extraction of oxygenated species (deoxygenation) from oxygen-containing molecules (such as CO₂, O₂, metal oxides or other oxygen-containing salts, which are estimated to always be below 10% by weight of the fluid), forming, in its last elementary step of the cathode mechanism, O²⁻ ions which are extracted from the cathode fluid through a ceramic solid electrolyte. Another differentiating aspect of the cathode fluid is its homogeneous catalytic capacity to promote the formation (through nucleation and growth mechanisms) of solid carbon particles from the reaction of different species (partially or completely electrochemically pre-deoxygenated in situ). Specifically, one of the pathways for the formation of carbonaceous particles is the dismutation of CO (Boudouard reaction) or the dismutation of CO* species adsorbed and/or partially loaded on metal, saline or carbonaceous clusters. Likewise, the present invention provides the means for (1) extracting the formed carbonaceous solid and separating it from the cathode fluid and (2) introducing CO₂ into the system, either as a gas or adsorbed/absorbed on solid particles.

Systems that use molten salts in electrochemical reactors for the conversion of CO₂ have been described in the literature (Otake et al., Electrochim. Acta, 100 (2013); United Aircraft Corporation, US Patent 36232864A, 24 Apr. 1964). These systems use a bath of molten salts, such as lithium or calcium halides, which acts as an electrolyte and/or as a solvent. The main difference between these systems and the present invention is that in the present invention the cathode fluid is mainly composed (at least 90% by weight) of a molten metal or a molten metal alloy. This has multiple advantages over molten salt baths. First, this mostly metal composition ensures that the electrical conductivity of the fluid is higher (at least 5 mS/cm), which favours better electrical contact and wettability of the electrode, favouring the collection/distribution of electric current, load transfer in electrochemical reactions and improving the energy efficiency of the process. On the other hand, the possibility of combining different metals in metal alloys facilitates the use of less critical and/or less noble metals and allows the temperature and operating conditions to be adjusted. Therefore, this makes it possible to adjust (1) the catalytic activity of the cathode fluid (molten metal) for the different coupled reactions that lead to the selective formation of solid carbon and (2) the textural properties (surface area, pore size distribution, tortuosity, connectivity between pores, etc.) of the solid carbon that is formed during the process (from amorphous to graphitic) and the chemical properties of its surface, such as the degree of surface oxidation or surface acidity or basicity, which improve its selective CO₂ adsorption/absorption capacity. Furthermore, the use of molten metal allows better thermal control of the process and increases the operating temperature, which improves the performance of the electrochemical reactor in terms of current density and energy efficiency in general. Lastly, the greater flexibility in the operating temperature and the majority presence of metal in the cathode fluid make it possible to take advantage of the Boudouard reaction in favour of the overall method for CO₂ decomposition, thanks to the catalytic function of the metal and the possibility of operating in temperature ranges that favour this reaction. From another perspective, the use of a molten metal entails much fewer corrosion problems for the constituent materials of the vessel, electrochemical cell, electrical connectors, etc., compared to the use of molten salts with an alkaline nature.

### Description of the invention

The present invention relates to a method for decomposing carbon dioxide (CO₂) into its elemental components, solid carbon (C) and gaseous oxygen (O₂), according to the following reaction:

CO₂ (g) --> C (s) + O₂ (g) (i)

To do so, an electrochemical reactor is used consisting of at least two chambers separated by a solid electrolyte (3). This solid electrolyte is under the action of an electric field (there is a potential difference between both sides of the same). On one side of the electrolyte is the cathode chamber (1), and on the other side is the anode chamber (4).

According to the method for decomposing CO₂ into solid C and O₂ of the present invention that is carried out in an electrochemical reactor, it comprises at least the following steps:
i) Introducing CO₂ into a cathode chamber (1) containing at least one cathode fluid (2) with electrical conductivity > 5 mS/cm.
ii) Decomposing the CO₂ in the cathode chamber by applying an electric field in the solid electrolyte (3), forming at least oxide ions (O²⁻), which are selectively transported through the solid electrolyte from the cathode chamber to an anode chamber (4), and solid carbon.
iii) Extracting, from the anode chamber, the O₂ produced on the anode (5) from the ions transported in step ii.
iv) Extracting, from the cathode chamber, the solid C formed in step ii.

According to a favourite embodiment, the cathode fluid may comprise at least a metal, a metal alloy or mixtures of two or more molten metals. This molten metal component can be a simple metal or an alloy that meets the aforementioned conditions. This metal is preferably selected from Mg, Cr, Mn, Fe, Co, Ni, Cu, Zn, Mo, Ru, Rh, Ag, W, Pt, Au, Al, Ga, In, Sn, Pb, Sb, Bi, Te, Si, and combinations thereof, preferably Ag, In, Sn, Pb, Sb, Bi, Si and combinations thereof, and more preferably it is pure Ag or an alloy containing Ag.

Furthermore, according to a particular embodiment, the cathode fluid may further comprise molten salts of metal cations below 10% by weight where said molten salts can be preferably selected from oxides, carbonates, sulphates, nitrates, or combinations thereof.

In this way, according to the method of the present invention, the cathode chamber can be occupied, totally or partially, by a cathode fluid (2), also known as a catholyte, with an electrical conductivity of at least 5 mS/cm. Some qualities of interest in the cathode fluid are the following:
- high electrical conductivity, preferably greater than 5 mS/cm, and more preferably greater than 5 S/cm, to transmit the electrical charge to the electrode;
- catalytic activity towards CO₂ reduction;
- melting point below the operating temperature, less than 1600°C, preferably less than 1200°C, more preferably less than 1100°C, so that it is molten under operating conditions;
- low vapour pressure under operating conditions, preferably less than 100 Pa, more preferably less than 10 Pa, to avoid losses of cathode fluid due to evaporation;
- CO₂ solubility (preferably greater than 0.1 ppm), low viscosity (preferably dynamic viscosity less than 0.2 mPa s) and low surface tension (preferably less than 0.2 N/m), which allow CO₂ to suitably diffuse under the reaction conditions;
- solubility of other species that may appear in the reactor during operation (CO, carbides, carbonates, oxides), preferably greater than 5 ppm;
- low tendency to form stable carbides (or other salts) (concentration less than 50 ppm at equilibrium), which would separate from the fluid phase and cause the loss of active fluid;
- in the event of forming stable oxides, said oxides will preferably be soluble in the cathode fluid (solubility > 1%) and/or will melt at a temperature similar to that of the cathode fluid and/or will exhibit good conductivity of the O²⁻ions (> 1 mS/cm);
- chemical compatibility with other elements of the reactor with which it is in contact (such as the solid electrolyte and/or the electrode of the cathode chamber, if any). According to the present invention, "compatibility" means that under operating conditions all the components remain unchanged, without any type of chemical or mechanical interaction with each other;
- homogeneous catalytic activity for forming carbon particles from simple gaseous or adsorbed molecular species in the cathode reaction medium.

In another particular embodiment of the invention, the cathode fluid acts as a cathode and current collector, while in other examples it can act only as a current collector, transmitting the current to the electrode (cathode) that is attached to the surface of the solid electrolyte on the side of the cathode chamber.

When CO₂ is introduced into the cathode chamber (1), it decomposes, forming at least oxide ions (O²⁻), which are selectively transported through the solid electrolyte (3) from the cathode chamber to an anode chamber (4), and solid carbon, C (s).

In the present invention, the formation of solid carbon, C (s), from CO₂ deoxygenation and/or reductive electrochemical processes can be carried out by different mechanisms. On the one hand, the direct reduction half-reaction (ii) in which the oxygen atoms are sequentially extracted due to the extraction of the oxide ion (O⁻²) through the solid electrolyte and the current distribution of the cathode and the cathode fluid:

CO₂ (g) + 4 e⁻ (electrode) → C (s) + 2 O²⁻ (electrolyte) (ii)

Another possible pathway involves the CO₂ electrochemical deoxygenation to give CO (iii), and the subsequent Boudouard reaction (iv) to form solid carbon through the dismutation of two CO molecules:

2 CO₂ (g) + 4 e⁻ (electrode) --> 2 CO (g) + 2 O²⁻ (electrolyte) (iii)

2 CO (g) → CO₂ (g) + C (s) (iv)

which combination can also give rise to the half-reaction (ii).

Another alternative involves mediation, through an oxidation-deoxygenation cycle, of any of the species present in the cathode fluid:

CO₂ (g) + X (red) → C (s) + X (ox) (v)

X (ox) + n e⁻ (electrode) → X (red) + n/2 O²⁻ (electrolyte) (vi)

where "X" is a component of the cathode fluid, such as oxides, molten metal nitrates or other molten salts present below 10% by weight, and "n" is the number of electrons transferred. Combining and adjusting the relationship between the reactions (v) and (vi), the half-reaction (ii) is obtained again.

The oxide ions (O²⁻) formed in the reduction/deoxygenation reactions are selectively transported through the solid electrolyte (3) from the cathode chamber to the anode chamber.

According to a preferred embodiment, the solid electrolyte that transports oxide ions is a ceramic solid that can be composed, preferably, of dense layers of multi-metal oxides including alkali metals, alkaline earth metals, rare earth elements, transition metals and combinations thereof, and more preferably it is a cerium or zirconium oxide with a fluorite-type structure and doped with yttrium, scandium or rare earth elements that can be selected from Ce, Sm, Gd and combinations thereof.

According to a particular embodiment, the solid electrolyte (3) is formed by a dense material (impermeable to the passage of gas and without open porosity) and exhibiting high conductivity of the O²⁻ ions (greater than 1 mS/cm) through its crystalline structure at the operating temperature. Likewise, the solid electrolyte material must have the minimum electronic conductivity possible under the operating conditions, below 5 mS/cm, preferably null, to avoid energy losses due to short circuits between the electrodes (which would reduce Faraday efficiency).

Some materials that meet these specifications, and therefore are suitable for use as electrolytes in the system defined in this invention, include:
- Cerium or zirconium oxide with a fluorite-type structure and doped with yttrium, scandium or various rare earth elements, such as gadolinium or samarium.
- Doped bismuth oxides, for example, Bi₂O₃ doped with erbium.
- Mixed oxides of gallium, magnesium and lanthanum with a simple perovskite-type structure, such as for example La_{0.8}Sr_{0.2}Ga_{0.8}Mg_{0.2}O₃
- Barium or strontium cerate, zirconate, titanate or thorate, with a simple perovskite-type structure, and doped with yttrium, scandium or various rare earth elements, such as for example BaCe_{0.9}Yb_{0.1}O₃ and BaTh_{0.9}Gd_{0.1}O₃
- Rare-earth wolframates, optionally doped with calcium, such as for example La_{5.94}Ca_{0.06}WO₁₂

These materials can be used as electrolytes in the system individually or in combinations thereof, for example, in a multilayer configuration.

On either side of the electrolyte are the anode and cathode of the electrochemical cell. Therefore, according to a preferred embodiment, the electric field applied in step ii can be applied using an electrode (5) located in the anode chamber as an anode and an electrode selected from a cathode (6) located in the cathode chamber and the cathode fluid (2) as a cathode.

On the electrode located in the anode chamber that acts as an anode (5), the O²⁻ions are oxidised to form gaseous oxygen (O₂):

2 O²⁻ (electrolyte) → O₂ (g) + 4 e⁻ (electrode) (vii)

According to a preferred embodiment, the electrode located in the anode chamber is an electrode composed of ceramic materials, and more preferably it is an electrode composed of at least one mixed oxide with a perovskite-type structure or mixtures thereof with particles of a material with ionic conduction.

In a particular embodiment, this electrode is a porous anode composed of materials that exhibit electronic conduction and/or O²⁻ ionic conductivity. The O²⁻ions are transferred from the solid electrolyte, they travel to the surface of the electrode through the internal crystalline lattice of the material and, on the surface, they are oxidised to O₂. The porous structure of the electrode increases the surface area available for surface reactions to take place. The materials that make up the electrode must exhibit high electronic conductivity (above 1 S/cm) and/or high ionic conductivity (above 1 mS/cm), catalytic activity for oxidation to O₂, compatibility with the solid electrolyte, good adhesion with the solid electrolyte (in accordance with ASTM D3359) and stability under reaction conditions. Suitable materials for this function are mixed oxides with a perovskite-type structure and derived structures, such as La_{0.6}Sr_{0.4}Fe_{0.8}Co_{0.2}O_{3-δ} (LSFC), (La_{0.8}Sr_{0.2})_{0.95}MnO_{3-δ} (LSM), alone or materials composed of mixtures of particles of these perovskites and/or particles of a material with mostly ionic conductivity, such as the material that makes up the electrolyte.

The reduction reactions that take place in the cathode chamber occur on the cathode of the electrochemical cell. According to different particular embodiments of the invention, this cathode function can be performed by the cathode fluid (2) itself, or an electrode (6) located in the cathode chamber on the surface of the solid electrolyte.

The electrode located in the cathode chamber (in configurations containing it) can preferably be an electrode composed of metals selected from Ni, Pt, Pd, Cu, ceramic materials based on doped La and/or Sr chromites, doped La and/or Sr titanates, doped Sr molybdates and combinations thereof (sometimes called cermets). The electrode located in the cathode chamber may further comprise particles of a material with ionic conductivity, such as the material that makes up the electrolyte.

According to a particular embodiment of the present invention, in configurations containing the electrode located in the cathode chamber, it is preferably an inorganic electrode, porous or not, and could be a ceramic solid, a metal or mixtures thereof (called "cermets"). This electrode must exhibit catalytic activity for the abstraction of oxygenated species from molecules containing oxygen (such as CO₂, O₂, metal oxides or other oxygen-containing salts) forming O²⁻ ions. The O²⁻ions formed in these reduction/deoxygenation reactions must be transported through the crystal lattice of the electrode material to the solid electrolyte and transferred thereto. In addition to catalytic activity, the materials that make up this electrode exhibit, preferably, high electronic conductivity (above 1 S/cm) and high ionic conductivity (above 1 mS/cm), compatibility with the electrolyte and with the cathode fluid (especially low solubility in the cathode fluid, preferably below 1 ppm), good wettability by the cathode fluid (contact angle less than 70°), good adhesion with the solid electrolyte (in accordance with ASTM D3359), and stability under reaction conditions.

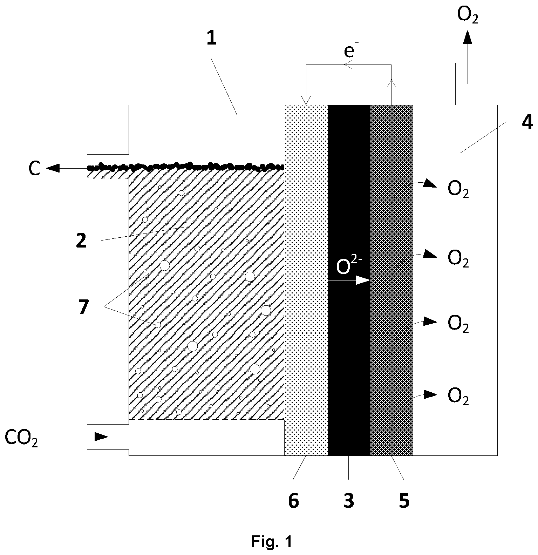

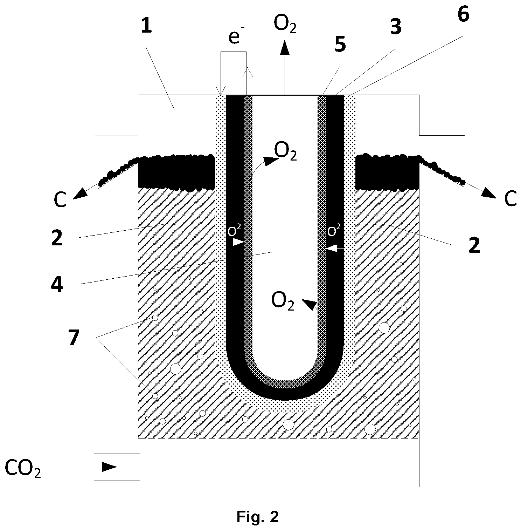

According to particular embodiments of the invention, the electrochemical cell, which comprises the cathode, the solid electrolyte and the anode, may have a flat geometry (Figure 1) or tubular geometry (Figure 2), and even another more complex geometry (such as a honeycomb or segmented-in-series configuration (Wetzko et al., J. Power Sources, 83 (1999)). Depending on its design and the manufacturing process, these cells can be supported on the anode, on the electrolyte or on the cathode. In the case of cells supported on the anode, the anode is the element that confers structural/mechanical stability to the cell. During its manufacturing, the structural support, in this case the anode, is prepared first, and then the solid electrolyte is deposited on the same, followed by the cathode (in configurations that have a solid electrode as a cathode). Similarly, in cells supported on the electrolyte, said electrolyte is the structural material that is prepared first, on which the anode and the cathode (if any) are deposited on either side. If the cell is supported on the cathode, there will be a solid electrode that acts as a cathode and confers structural stability to the cell. This material is prepared first, followed by the deposition of, first, the solid electrolyte and then the anode on its surface.

According to the present invention, the solid carbon formed in the cathode chamber, after reduction/deoxygenation, can be separated from the cathode fluid by mechanical means, for example, by flotation, filtration, centrifugation, and the cathode fluid embedded in this solid carbon can be recovered through thermal treatments at subatmospheric pressure or by electromagnetic means, as well as combinations thereof. After the separation of the solid carbon from the fluid, the hot cathode fluid must be recirculated so that it is fed again to the inlet of the cathode chamber of the electrochemical cell. For said recirculation, mechanical drive means are required (pumps, turbines, Venturi devices, etc.) or electromagnetic means.

According to a preferred embodiment, the CO₂ introduced in step i of the described process is introduced by a method selected between bubbling and adsorbed/absorbed on a solid.

Gaseous CO₂ can be introduced into the cathode chamber using diffuser holes or porous membranes located in different positions of the cathode chamber, for example, at the bottom of the column of cathode fluid in a vertical electrochemical cell arrangement. To introduce it, it may be preferable to pre-condition the CO₂ in temperature and pressure, to overcome the possible column of cathode fluid and the loss of pressure during its diffusion through the cathode fluid until its final conversion into solid carbon. Alternatively, CO₂ can be introduced using a fluid or a solid that contains CO₂ and releases CO₂ in a controlled manner under the conditions prevailing within the cathode chamber, such as, for example, (1) a solid that has adsorbed CO₂, such as a structured carbon; (2) a solid that has it absorbed, such as a solid that contains alkali or alkaline earth cations (such as calcium), which releases CO₂ in the cathode chamber (absorbing heat, since it is an endothermic process) and they are regenerated to be active in subsequent CO₂ capture cycles of gaseous streams; (3) a molten salt (in a proportion of less than 10% by weight with respect to the metal component of the cathode fluid) that may contain carbonates or CO₂ complexes.

According to a particular embodiment, CO₂ is introduced adsorbed/absorbed on a solid where said solid is porous and selected from organic polymers, molecular sieves, solid organometallic materials, metal oxides and combinations thereof.

According to another particular embodiment, CO₂ is introduced as adsorbed/absorbed on a solid and said solid is selected from activated carbon, activated carbon fibres, carbon nanotubes, graphene, graphene-based materials and combinations thereof. A preferred option may be using the solid carbon obtained from the process (step iv) of the present invention for the adsorption of CO₂, this being reintroduced into the process as a carrier of CO₂. In a particular embodiment, species containing heteroatoms, such as NH₃ or nitrates or Ca salts or other alkali or alkaline earth cations, which provide basicity to the solid carbon obtained and extracted from the reactor and, consequently, give it greater selective CO₂ adsorption/absorption capacity, can be added to the CO₂ gas stream or to the cathode fluid. One relevant aspect is the possible incorporation of heteroatoms in the carbon formed, so that they provide basicity and greater selective CO₂ adsorption/absorption capacity, such that the N/C molar ratio in the carbon is controlled, which, in turn, determines basicity.

This electrochemical method for decomposing CO₂ is normally carried out at temperatures selected between 400 and 1600°C, preferably between 500 and 1200°C, and more preferably between 600 and 1100°C. The operating temperature must be maintained above the melting temperature of the cathode fluid material. Furthermore, the high temperature is necessary to ensure (1) the mobility of the ionic species through the electrochemical cell materials (electrodes and electrolyte), as well as in the cathode fluid; and (2) the catalytic activity for the nucleation and growth of carbonaceous particles.

On the other hand, in the present invention, the formation of solid carbon from CO₂ is sought. One of the reactions involved in this mechanism is the Boudouard reaction (iv), which is favoured in the sense of carbon formation, both kinetically and thermodynamically, below 600-700°C (Chen et al., ECS Trans, 28 (2010)). Nevertheless, the electrochemical extraction of oxygen contained in oxidised species (e.g., the CO₂ itself) allows the reaction equilibrium to be favourably shifted, maximising the formation of solid carbon (Malerød-Fjeld et al., Nat. Energy, 2 (2017)). Other factors that influence the kinetics and/or extent (% conversion) of this reaction include the presence and heterogeneity of a gas/solid interface, the concentration of CO and CO₂, and the nature of the catalytic elements included in the cathode fluid. Some catalytic elements that can be used to promote this reaction are Ni, Co, Fe, Cr, Mo and Mg.

The absolute (barometric) pressure inside the reactor can range between 0.5 and 50 atm, preferably between 1 and 15 atm. In the cathode chamber, this pressure will be between 0.5 and 50 atm, preferably between 1 and 15 atm, while in the anode chamber the pressure of O₂ can reach between 0.5 and 50 atm, preferably between 1 and 15 atm.

Regarding the electrochemical operation, the cell voltage must be between 0.5 and 4 V, preferably between 1.0 and 2.1 V, to allow CO₂ to reduce to CO and/or C, and the current density must be between 0.01 and 5 A/cm², preferably between 0.1 and 0.5 A/cm².

CO₂ inflow, is typically set to a value such that the space velocity (measured in milligrams of CO₂ per hour and per cm³ of cathode fluid), is in the range of 5 mg/cm³h to 2 g/cm³h, more preferably between 10 and 500 g/cm³h.

The conversion of CO₂ into solid carbon must be as high as possible, at least 90%, preferably greater than 99%. In a particular embodiment of the invention, if less than 95% conversion per step is achieved, the unreacted gas leaving the cathode chamber (containing a mixture of CO₂ and CO) can be recirculated along with *fresh* input CO₂ into the reactor, to increase the overall conversion.

The presence of H₂S, HCl/Cl₂ and/or O₂ in the inlet stream in concentrations greater than 100 ppm must be avoided. In the case of CO₂ streams containing quantities greater than these amounts, a pretreatment of physical adsorption or chemical absorption will be required for its elimination. On the contrary, some substances, such as CO, NH₃, H₂O, ethylene or propylene, may promote the conversion of CO₂ and/or the nucleation and growth of solid particles of a mainly carbonaceous nature. In a particular embodiment of the invention, 5% CO is added to improve the conversion.

Different cells can be integrated in arrangements found in series or in parallel, such as in the form of stacks or bundles of tubes. In these configurations, the cells can share the same cathode fluid that would act as a cathodic equipotential medium and electric current distributor.

Lastly, gaseous oxygen (O₂) formed in the anode reaction, which has high purity, is extracted from the anode chamber and can be used in medical or farming applications or as a reagent in multiple industrial processes.

Throughout the description and the claims, the word "comprises" and its variants do not intend to exclude other technical features, additives, components or steps. For those skilled in the art, other objects, advantages and features of the invention may be partially deduced from both the description and the embodiment of the invention.

### Brief description of the figures

The following list includes the legend of the indices used in the figures:
1) Cathode chamber
2) Cathode fluid
3) Solid electrolyte
4) Anode chamber
5) Anode
6) Cathode
7) CO₂ dispersed in the cathode fluid

Figure 1.
   It shows a simplified representation of a cross section of the system for carrying out the electrochemical CO₂ decomposition in its elemental components, solid carbon and gaseous oxygen. In this particular embodiment, an electrode has been included in the cathode chamber that acts as a cathode.
Figure 2.
   Figure 2 shows a simplified representation of a particular embodiment of the invention, in which the electrochemical cell, composed of the cathode, the solid electrolyte and the anode, has a tubular geometry.

### EXAMPLES

The present invention is illustrated with the following examples that are not intended to limit the same.

### Example 1.

In a quartz tube, with porous quartz frit fixed (welded) in its section, having an outer diameter of 2 cm and a length of 50 cm, a tubular electrochemical cell is placed according to the diagram shown in Figure 2.

The electrochemical cell is a concentric tubular cell (with a blind or closed end), having an outer diameter of 1 cm and length of 30 cm, supported on the electrolyte. To manufacture it, a dense tubular 8YSZ membrane from the supplier KYOCERA-FRIATEC with a wall thickness of 0.8 mm is used, which will constitute the support for all the components of the cell.

La_{0.7}Sr_{0.3}Mn_{0.8}Fe_{0.2}O₃ perovskite has been selected as an anode (O₂ electrode) of the electrochemical cell. This material is prepared by the citrate method (Pechini's method). To prepare it, the stoichiometric amounts of the nitrates of the different metals of the compound are dissolved in water, citric acid is added in a 2:1 molar ratio with respect to the total moles of cations, and subsequently ethylene glycol is added in a 4:1 molar ratio with respect to the total moles of cations. The final solution is progressively heated to 150°C until a viscous spongy gel is obtained. Lastly, this gel is calcined at 1000°C for 2 hours, using a heating ramp of 2 K/min. The materials obtained are ground in acetone for 15 hours using a ball mill (stabilised zirconium oxide balls) until obtaining a particle size in the range of 0.2 - 0.6 microns. Next, with these particles, a slurry is prepared using terpineol (47% by weight) as a medium and ethylcellulose (3% by weight) as a plasticiser. A porous layer of this slurry is deposited by immersion (dip-coating), 50 microns thick in green, on the internal surface of the solid electrolyte (inside the tube). This porous layer is dried at 60°C for 4 hours and then fired at 1100°C for 2 hours. After firing, a porous anode measuring 10 cm long, 25 microns thick and having an in-plane electrical conductivity of 5 S/cm is obtained.

As a cathode of the electrochemical cell, a composite material mixed with Pt/8YSZ (5/5 in volume) has been selected, which is deposited on the outer area of the solid electrolyte (external part of the tube) by RF Co-Sputtering in Ar with a deposition temperature of 400°C. The final thickness of the electrode is 400 nm and 10 cm long.

The space between the quartz tube and the electrochemical cell constitutes the cathode chamber. This cathode chamber is filled with 20 cm³ of a molten alloy of 5% Ni - 95% Ag by weight (Johnson-Mattey) that is maintained at 1000°C by using an electrical resistance (WATLOW ceramic heater) placed around the quartz container.

Platinum wool, a highly conductive material that will act as a current collector distributing the electric current to the anode, is inserted into the interior lumen of the tubular cell. The molten alloy acts as a current collector, allowing the electric current to reach the cathode (exterior electrode of the tubular cell). A Kanthal^{®} alloy cylinder is inserted in order to allow the current to reach to the molten alloy. A DC power supply (Kethley 6220) is connected by copper wires to the current collector in contact with the anode and to the cylinder inserted in the molten alloy.

A CO₂ flow of 1.3 g/h (110 Nml/min of CO₂) is dosed using a mass flow controller and preheated to 1000°C before being injected into the cathode chamber. The CO₂ stream is injected into the cathode chamber from the bottom, at an inlet pressure of 1.5 atm (absolute) to overcome the column of the cathode fluid and the loss of pressure during its diffusion through this fluid until its final conversion into solid carbon.

The reactor is operated at 1000°C (maintaining the temperature by the resistance placed around the quartz container).

The power supply is connected in potentiometric mode by applying a voltage of 1.5 V, obtaining a current density of 0.1 A/cm².

Operating the cell in this manner results in a 95% conversion into solid carbon, producing 0.34 g/h of solid carbon and 0.92 g/h of O₂ (which is equivalent to 0.26 g of solid carbon and 0.71 g of O₂ for every g of input CO₂).

The solid carbon formed in the reaction accumulates at the top of the cathode chamber, on the surface of the cathode fluid, forming a carbon layer made up of solid carbon particles. When said layer reaches a thickness of several millimetres (3-8 mm) on the free surface of the bath, the carbon particles overflow into a lateral cavity where they fall by gravity.

### Example 2.

Method for CO₂ electrochemical reduction according to example 1 in which the inlet gas is composed of a mixture of 95% vol. of CO₂ and the rest of CO. In this way the conversion of CO₂ obtained exceeds 97%.

### Example 3.

Method for CO₂ electrochemical reduction according to example 1 in which the operating temperature is 950°C. In this way the conversion of CO₂ obtained is 90%, the cell voltage is 1.8V and the porosity of the obtained solid carbon increases by 10%.

## Claims

1. The method for decomposing CO₂ into solid C and O₂ in an electrochemical reactor, which comprises at least the following steps:
i) Introducing CO₂ into a cathode chamber (1) containing at least a cathode fluid (2) with electrical conductivity > 5 mS/cm.
ii) Decomposing the CO₂ in the cathode chamber by applying an electric field through the solid electrolyte (3), forming at least oxide ions (O²⁻), which are selectively transported through the solid electrolyte from the cathode chamber to an anode chamber (4), and solid carbon.
iii) Extracting, from the anode chamber, the O₂ produced on the anode (5) from the ions transported in step ii.
iv) Extracting, from the cathode chamber, the solid C formed in step ii.

2. The method for decomposing CO₂ according to claim 0, **characterised in that** the cathode fluid comprises at least a metal, a metal alloy or mixtures of two or more molten metals.

3. The method for decomposing CO₂ according to claim 0, **characterised in that** the metal of the cathode fluid is selected from Mg, Cr, Mn, Fe, Co, Ni, Cu, Zn, Mo, Ru, Rh, Ag, W, Pt, Au, Al, Ga, In, Sn, Pb, Sb, Bi, Te, Si, and combinations thereof.

4. The method for decomposing CO₂ according to claim 0, **characterised in that** the metal of the cathode fluid is pure Ag or an alloy containing Ag.

5. The method for decomposing CO₂ according to claim 2, **characterised in that** the cathode fluid further comprises molten metal cation salts below 10% by weight.

6. The method for decomposing CO₂ according to claim 0, **characterised in that** the molten salts are selected from oxides, carbonates, sulphates, nitrates, or combinations thereof.

7. The method for decomposing CO₂ according to any of the preceding claims, **characterised in that** the solid electrolyte that transports oxide ions is a ceramic solid.

8. The method for decomposing CO₂ according to claim 0, **characterised in that** the ceramic solid is composed of dense layers of multi-metal oxides including alkali metals, alkaline earth metals, rare earth elements, transition metals and combinations thereof.

9. The method for decomposing CO₂ according to claim 0, **characterised in that** the ceramic solid is a cerium or zirconium oxide with a fluorite-type structure and doped with yttrium, scandium or rare earth elements.

10. The method for decomposing CO₂ according to any of the preceding claims, **characterised in that** the electric field applied in step ii is applied using an electrode (5) located in the anode chamber as an anode and an electrode selected from a cathode (6) located in the cathode chamber and the cathode fluid (2) as a cathode.

11. The method for decomposing CO₂ according to claim 0, **characterised in that** the electrode located in the anode chamber is an electrode composed of ceramic materials.

12. The method for decomposing CO₂ according to claim 0, **characterised in that** the anode is an electrode composed of at least one mixed oxide with a perovskite-type structure or mixtures thereof with particles of a material with ionic conductivity.

13. The method for decomposing CO₂ according to claim 0, **characterised in that** the electrode located in the cathode chamber is an electrode composed of metals selected from Ni, Pt, Pd, Cu, ceramic materials based on doped La and/or Sr chromites, doped La and/or Sr titanates, doped Sr molybdates and combinations thereof.

14. The method for decomposing CO₂ according to claim 03, **characterised in that** the electrode located in the cathode chamber further comprises particles of a material with ionic conductivity.

15. The method for decomposing CO₂ according to any of the preceding claims, **characterised in that** the electrochemical cell where it is conducted has a flat or tubular geometry.

16. The method for decomposing CO₂ according to any of the preceding claims, **characterised in that** the solid C extracted in step iv is separated from the cathode fluid by mechanical means.

17. The method for decomposing CO₂ according to claim 0, **characterised in that** the mechanical process is selected between flotation, filtration, centrifugation, and recovery of the cathode fluid embedded in the solid C through thermal treatments at subatmospheric pressure or by magnetic means, or combinations thereof.

18. The method for decomposing CO₂ according to any of the preceding claims, **characterised in that** the CO₂ introduced in step i is introduced by a method selected between bubbling and adsorbed/absorbed on a solid.

19. The method for decomposing CO₂ according to claim 0, **characterised in that** CO₂ is introduced adsorbed/absorbed on a solid where said solid is porous and is selected from organic polymers, molecular sieves, solid organometallic materials, metal oxides and combinations thereof.

20. The method for decomposing CO₂ according to claim 0, **characterised in that** CO₂ is introduced adsorbed/absorbed on a solid and said solid is selected from activated carbon, activated carbon fibres, carbon nanotubes, graphene, graphene-based materials and combinations thereof.

21. The method for decomposing CO₂ according to any of the preceding claims, **characterised in that** the solid C extracted in step iv is used for the adsorption of CO₂ and is reintroduced into the process as a carrier of CO₂ in step i.

22. The method for decomposing CO₂ according to any of the preceding claims, **characterised in that** the operating temperature is between 400 and 1600°C.

23. The method for decomposing CO₂ according to any of the preceding claims, **characterised in that** the voltage of the electric field applied in step ii is between 0.5 and 4 V.
